# EUROPÄISCHE PATENTANMELDUNG

(11) **EP 1 426 423 A1**
(43) Veröffentlichungstag der Anmeldung: **09.06.2004**
(21) Anmeldenummer: 03103815.1
(22) Anmeldetag: 15.10.2003
(51) Int. Cl.: C09D 167/00, C08G 18/42

(54) **Pulverlackzusammensetzungen für Beschichtungen mit mattem Erscheinungsbild**

(30) Priorität: 07.12.2002 DE 10257217
(71) Anmelder: Degussa AG, 40474 Düsseldorf (DE)
(72) Erfinder: Weiss, Jörn-Volker, 45721 Haltern am See (DE); Grenda, Werner, 44627 Herne (DE)

(57) **Zusammenfassung**

Die Erfindung beschreibt Pulverlackzusammensetzungen auf der Basis von Carboxylgruppen bzw. Hydroxylgruppen haltigen Polyestern, Vernetzern und anderen üblichen Zusatzstoffen für Beschichtungen mit mattem Erscheinungsbild.

## Beschreibung

Die Erfindung beschreibt Pulverlackzusammensetzungen auf der Basis von Carboxylgruppen bzw. Hydroxylgruppen haltigen Polyestern, Vernetzern und anderen üblichen Zusatzstoffen für Beschichtungen mit mattem Erscheinungsbild.

Beschichtungssysteme, die einem Substrat eine gleichmäßig ebene und matte Oberfläche verleihen, besitzen ein erhebliches Interesse. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes, kleinere oder größere Mengen Füllstoffe, wie z. B. Kreide, fein verteiltes Siliciumdioxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar deutlich eine Mattierung, aber geringfügige Änderungen während des Extrudierens führen zu Schwankungen im Oberflächenglanz. Die Reproduzierbarkeit des Matteffektes ist nicht gewährleistet.

Polyester-Pulverlacke sind Pulverlacke, die als Bindemittel saure Polyester und Vernetzer mit reaktiven Glycidyl- bzw. Hydroxyalkylamid-Gruppen enthalten. marktübliche Vernetzer, die weltweit zum Einsatz kommen, sind Tri-glycidyl-isocyanurat (TGIC) und β-Hydroxyalkylamid und deren Derivate. Pulverlacke auf Basis hydroxylgruppenhaltiger Polyester fallen nicht unter den Begriff Polyester-Pulverlacke. Da sie ausschließlich mit Polyisocyanaten vernetzt werden, bilden sie die Gruppe der Polyurethan-Pulverlacke.

Polyester- wie auch Polyurethan-Pulverlacke führen zu witterungsstabilen Beschichtungssystemen, d. h. sie sind für Anwendungen im Außenbereich einsetzbar und damit von großer technischer und wirtschaftlicher Bedeutung. Über die Möglichkeiten zur Mattierung beider Systeme sind zahlreiche Veröffentlichungen und Patente erschienen, z.B. DE-OS 196 30 844, DE-OS 196 37 375 , DE-OS 196 37 377, DE-OS 198 16 547, EP 0 698 645 und R. Franiau, Advances in β-Hydroxy-alkylamide crosslinking chemistry ECJ , (2002) 10, p 409ff.

In der DE-OS 100 42 318 werden nun matte Polyurethan-Pulverlacke beschrieben, die aus bestimmten hydroxylgruppenhaltigen Polyestern, marktüblichen Polyisocyanaten als Vernetzern und speziellen, separat hergestellten Polyharnstoffen als Mattierungsmitteln bestehen. Die Mattierung des Systems wird durch die Verwendung bestimmter Hydroxylgruppen-haltigen Polyester in Kombination mit Polyharnstoffen erzielt.

Des weiteren beschreibt die DE 102 33 103 matte Polyurethan-Pulverlacke, die bestimmte Kombinationen amorpher und/oder (semi)kristalliner Polyester, Polyharnstoffe, Vernetzer sowie übliche Hilfs- und Zusatzstoffe enthält.

Die genannten Mattierungsprinzipien können auch auf Polyester-Pulverlacke angewandt werden, wenn anstelle der Kombination amorpher/kristalliner Hydroxlgruppenfunktionalisierter Polyester die entsprechenden carboxylgruppenhaltigen Polyester in Kombination mit Polyharnstoffen und auch gegebenenfalls anderen Füllstoffen eingesetzt werden, wie in DE 102 55 250 beschrieben.

Überraschenderweise wurde nun gefunden, dass amorphe Polyester, OH- bzw. COOH-funktionalisiert, mit ganz bestimmten (semi)kristallinen Polyestern, ebenfalls OH- bzw. COOH-funktionalisiert, auch ohne Zusatz von Polyharnstoff und oder anderen Füllstoffen in den entsprechenden Polyurethan- wie auch Polyester-Pulverlack-Systemen zu matten Beschichtungen führen.

Gegenstand der Erfindung sind Pulverlackzusammensetzung für Beschichtungen mit mattem Erscheinungsbild im Wesentlichen enthaltend
A) eine Vernetzerkomponente und
B) eine COOH-Gruppen und/oder OH-Gruppen haltige Polyesterkomponente bestehend aus
   B1) 10 bis 80 Gew.-% mindestens eines amorphen Polyesters,
   B2) 20 bis 90 Gew.-% mindestens eines (semi)kristallinen Polyesters, erhalten durch Umsetzung von 50 bis 100 Mol-% Bernsteinsäure und/oder Adipinsäure und/oder Sebacinsäure und/oder Dodecandisäure und/oder -anhydrid und/oder - ester und 50 bis 100 Mol-% Monoethylenglykol, Butandiol-1,4 und/oder Hexandiol-1,6,
   wobei der Polyester eine OH-Zahl von 0 bis 200 mg KOH/g und eine Säurezahl von 0 bis 150 mg KOH/g aufweist und mindestens eine Zahl größer als null ist, und pro funktionelle Gruppe des Polyesters 0,6 bis 1,2 reaktive Gruppen des Vernetzers zur Verfügung stehen.

Die Pulverlackzusammensetzunen können C) 0.5 - 50 Gew.-% Hilfs- und Zusatzstoffe enthalten.

Bei dem Polyester B) ist es erfindungswesentlich, dass es sich dabei um Mischungen aus 40 - 80 Gew.-%, bevorzugt 60 - 70 Gew.-%, mindestens eines amorphen Polyester B1) und 20 - 60 Gew.-%, bevorzugt 30 - 40 Gew.-%, mindestens eines (semi)kristallinen Polyesters B2) handelt.

Die eingesetzten Carboxylgruppen wie auch Hydroxylgruppen haltigen Polyester werden hergestellt durch Polykondensation von geeigneten Di- und/oder Polycarbonsäuren, -estern und/oder Anhydriden und Di- und/oder Polyolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist.
Die erfindungsgemäß eingesetzten amorphen Polyester B1) haben bevorzugt eine COOH- bzw. OH-Zahl von 15 - 200 mg KOH/g, einen Tg von 35 - 85 °C, einen Schmelzbereich von 60 bis 110 °C und eine Hydroxyl- bzw. Säurezahl von < 10 mg KOH/g. Die Molmassen betragen bevorzugt 2000 bis 7000.

Die für die Herstellung der Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, 1,4-Cyclohexandicarbonsäure bzw. - soweit zugänglich - deren Anhydride oder Ester. Besonders gut geeignet sind Isophthalsäure, Terephthalsäure, Hexahydroterephthalsäure und 1,4-Cyclohexandicarbonsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage. Ganz bevorzugt sind Monoethylen-glykol, Neopentylglykol, Dicidol, Cyclohexandimethanol, Trimethylolpropan und Glycerin.

Die (semi)kristallinen Polyester B2) weisen in der Regel eine COOH- bzw. OH-Zahl von 15 - 150 mg KOH/g auf; die Schmelzpunkte liegen zwischen 60 und 130 °C und die Glasübergangstemperatur <-10 °C, das mittlere Molekulargewicht liegt zwischen 1800 und 6500. Diese Polyester basieren auf linearen Dicarbonsäuren und aliphatischen oder cycloaliphatischen, linearen oder verzweigten Polyolen. Als Dicarbonsäuren werden Bernsteinsäure, diese ist bevorzugt, und/oder Adipinsäure und/oder Sebacinsäure und/oder Dodecandisäure in Mengen von mindestens 50 mol-%, bevorzugt von mindestens 85 mol-%, bezogen auf die Gesamtmenge aller Carbonsäuren, eingesetzt. In dieser Erfindung schließt der Ausdruck Dicarbonsäure stets auch deren Ester, Anhydride oder Säurechloride ein, da sie selbstverständlich ebenfalls eingesetzt werden können. In deutlich geringeren Anteilen bis maximal 50 mol-%, bevorzugt bis 15 mol-%, können gegebenenfalls andere aliphatische, cycloaliphatische oder aromatische Dicarbonsäuren mitverwendet werden. Beispiele für derartige Dicarbonsäuren sind Glutarsäure, Azelainsäure, 1,4-, 1,3- oder 1,2-Cyclohexandicarbonsäure, Terephthalsäure oder Isophthalsäure. Als Polyolkomponente für die (semi)kristallinen Polyester werden Monoethylenglykol und/oder Butandiol-1,4, dieses ist bevorzugt, und/oder Hexandiol-1,6 in Mengen von mindestens 50 mol-%, bevorzugt 80 mol-%, bezogen auf die Gesamtmenge aller Polyole, eingesetzt. In Mengen von maximal 50 mol-%, bevorzugt 20 mol-% können gegebenenfalls andere aliphatische oder cycloaliphatische, lineare oder verzweigte Polyole mitverwendet werden. Beispiele solcher Polyole sind Diethylenglykol, Hydroxypivalinsäureneopentylglykol, Neopentylglykol, Cyclohexandimethanol, Pentandiol-1,5, Pentandiol-1,2, Nonandiol-1,9, Trimethylolpropan, Glyzerin oder Pentaerythrit.

Als Vernetzer A) für die COOH-funktionalisierten Polyester sind prinzipiell alle bekannten Vernetzer auf der Basis von Polyepoxyden (TGIC und Derivate) und Polyhydroxyalkylamiden für den Bereich Pulverlacke einsetzbar. Bevorzugt werden marktgängige Produkte wie ARALDIT PT 810, PT 910, PT 912 (Vantico), PRIMID 552, QM 1260, SF 4510 (Ems) und VESTAGON HA 320 (Degussa) sowie PROSID H, S (SIR).

Besonders bevorzugt sind β-Hydroxylalkylamide. Sie werden z. B. in der EP 957 082, EP 649 890, EP 322 834, EP 322 807, EP 262 872, US 4,076,917 beschrieben.

In einer bevorzugten Ausführungsform der Erfindung werden folgende β-Hydroxyalkylamide A) eingesetzt: 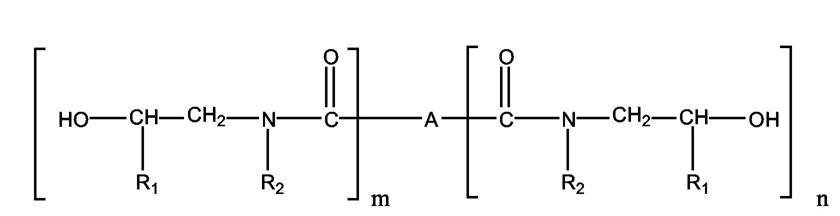 in der R₁ Wasserstoff, ein aromatischer Rest oder eine C₁-C₅-Alkylgruppe, R₂ Wasserstoff, ein aromatischer Rest eine C₁-C₅-Alkylgruppe oder 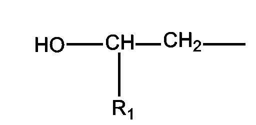 und A eine chemische Bindung oder eine einwertige oder mehrwertige organische Gruppe, ausgewählt aus gesättigten, ungesättigten oder aromatischen Kohlenwasserstoffgruppen, oder substituierten Kohlenwasserstoffgruppen, mit 2 bis 20 Kohlenstoffatomen, bedeuten, m ist 1 bis 2, n ist 0 bis 2 und m + n ist mindestens 1. Besonders bevorzugt weisen diese Verbindungen eine Funktionalität von vier auf Die β-Hydroxyalkylamide sind bevorzugt in Mengen von 2 - 10 Gew.-%, besonders bevorzugt von 3 - 5 Gew.-% enthalten.

Als Vernetzer A) für die OH-funktionalisierten Polyestergemische B) sind prinzipiell alle bekannten Vernetzer mit einer Funktionalität von mindestens 1,7 auf der Basis von Polyisocyanaten für den Bereich Pulverlacke einsetzbar. Bevorzugt werden blockierungsmittelhaltige wie auch intern blockierte Polyisocyanate eingesetzt. Sie werden z. B. in der DE-OSS 21 05 777, 25 42 191, 27 35 497, 30 39 824, 30 30 572, 30 30 513 und 37 39 549, beschrieben.

Als Isocyanate zur Herstellung der Vernetzerkomponente A) werden Diisocyanate aliphatischer und (cyclo)aliphatischer und/oder cycloaliphatischer Struktur eingesetzt. Derartige Diisocyanate werden z. B. im Houben-Weyl, Methoden der organischen Chemie, Band 14/2, S. 61 ff und J. Liebigs Annalen der Chemie, Band 562, S. 75 - 136 beschrieben. Bevorzugt werden in der Regel die technisch leicht zugänglichen aliphatischen Diisocyanate wie Hexamethylendiisocyanat (HDI), 2-Methyl-pentamethylen-1,5-diisocyanat, 2-Ethyltetramethylen-1,4-butandiisocyanat oder Trimethyl-hexamethylen-1,6-diisocyanat (TMDI), insbesondere das 2,2,4- und das 2,4,4-Isomere und technische Gemische beider Isomeren, die (cyclo)aliphatischen Diisocyanate wie Isophorondiisocyanat (IPDI) sowie die cycloaliphatischen Diisocyanate wie 4,4' Diisocyanatodicyclohexylmethan (HMDI) oder Norbornandiisocyanat eingesetzt. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen.

Zur Herstellung der Urethangruppen enthaltenden Vernetzerkomponente A) wird in einer ersten Stufe das Diisocyanat mit dem Polyol umgesetzt. Hierbei wird zu dem bei 100 bis 120 °C vorgelegten Diisocyanat das Polyol unter intensivem Rühren innerhalb von 2 bis 3 Stunden unter Stickstoff und Ausschluss von Feuchtigkeit so zudosiert, dass pro OH-Äquivalent des Polyols mindestens 2, maximal 8, vorzugsweise 4 bis 6 Äquivalente NCO des Diisocyanats zur Reaktion kommen. Um die Reaktion zu beschleunigen, kann man einen konventionellen Urethanisierungskatalysator hinzugeben, z. B. Organozinnverbindungen wie auch bestimmte tertiäre Amine, wie Triethylendiamin, und zwar in einer Menge von 0,01 bis 1 Gew.-%, vorzugsweise 0,05 bis 0,15 Gew.-%, bezogen auf das Reaktionsgemisch.

In der zweiten Stufe werden dann die NCO-Gruppen mit einem Blockierungsmittel blockiert. Die Reaktion kann in Substanz oder auch in Gegenwart geeigneter (inerter) Lösemittel durchgeführt werden. Bevorzugt wird jedoch in Substanz gearbeitet. Dabei wird zu dem Polyol-Diisocyanat-Addukt bei ca. 100 bis 130 °C das Blockierungsmittel portionsweise so zugegeben, dass die Temperatur nicht über 140 °C steigt. Nach Beendigung der Zugabe des Blockierungsmittels wird die Reaktionsmischung zur Vervollständigung der Umsetzung nun etwa 1 bis 2 h bei 130 °C erhitzt. Das Blockierungsmittel wird in solchen Mengen zugegeben, dass auf 1 NCO-Äquivalent des urethanisierten Diisocyanats 0,7 bis 1,1 mol Blockierungsmittel, bevorzugt 1 mol, zur Reaktion kommen.
Geeignete Polyole für die Umsetzung mit dem Diisocyanat in der ersten Stufe des Herstellverfahrens sind alle in der PUR-Chemie bekannten Polyole wie z. B. Ethylenglykol, Propandiol-1,3, Butandiol-1,4, Pentandiol-1,5, 3-Methyl-pentandiol-1,5, Hexandiol-1,6, 2,2,4 (2,4,4)-Trimethylhexandiol-1,6, 1,4-Di(hydroxymethyl)-cyclohexan, Diethylenglykol, Triethylenglykol, Diethanolmethylamin, Neopentlylglykol, Triethanolamin, Trimethylol-propan, Trimethylolethan, Glycerin, Pentaerythrit.

Eine vorteilhafte Variante des Herstellverfahrens besteht darin, dass die blockierten Diisocyanat-Addukte in umgekehrter Reihenfolge hergestellt werden; d. h. in der ersten Stufe erfolgt partielle Umsetzung des Diisocyanats mit dem Blockierungsmittel und in der zweiten Stufe die Umsetzung mit dem Polyol.

Das besonders bevorzugte Diisocyanat zur Herstellung der Urethangruppen haltigen Vernetzerkomponente A) ist Isophorondiisocyanat.

Die o. g. Diisocyanate werden auch zur Herstellung der Trimerisate (Isocyanurate) eingesetzt. Die Herstellung der Trimerisate erfolgte in bekannter Weise nach den Angaben der GB-PS 13 91 066, DE-PSS 23 25 826, 26 44 684 oder 29 16 201. Die Verfahrensprodukte bestehen aus Isocyanatoisocyanurat mit gegebenenfalls höheren Oligomeren. Sie weisen einen NCO-Gehalt von 10 bis 22 Gew.-% auf.

In der Urethan- und Isocyanuratgruppen enthaltenden Vernetzerkomponente A) ist das Verhältnis der Urethangruppen zu den Isocyanuratgruppen beliebig einstellbar.

Als Blockierungsmittel zur Blockierung der Isocyanatgruppen der Vernetzerkomponente A) können alle Blockierungsmittel eingesetzt werden. Beispielsweise können Phenole wie Phenol, und p-Chlorphenol, Alkohole wie Benzylalkohol, Oxime wie Acetonoxim, Methylethylketoxim, Cyclopentanonoxim, Cyclohexanonoxim, Methylisobutylketoxim, Methyl-tert.-butylketoxim, Diisopropylketoxim, Diisobutylketoxim oder Acetophenonoxim, N-Hydroxy-Verbindungen wie N-Hydroxysuccinimid oder Hydroxypyridine, Lactame wie ε-Caprolactam, CH-acide Verbindungen wie Acetessigsäureethylester oder Malonsäureester, Amine wie Diisopropylamin, heterocyclische Verbindungen mit mindestens einem Heteroatom wie Mercaptane, Piperidine, Piperazine, Pyrazole, Imidazole, Triazole und Tetrazole, α-Hydroxybenzoesäureester wie Glykolsäureester oder Hydroxamsäureester wie Benzylmethacrylohydroxamat verwendet werden.

Als Blockierungsmittel besonders geeignet sind ε-Caprolactam, Acetonoxim, Methylethylketoxim, Acetophenonoxim, Diisopropylamin, 3,5-Dimethylpyrazol, 1,2,4-Triazol, Glykolsäurebutylester, Benzylmethacylohydroxamat oder p-Hydroxybenzoesäuremethylester.

Selbstverständlich können auch Mischungen dieser Blockierungsmittel eingesetzt werden.

Zur Durchführung der Blockierungsreaktion wird im Allgemeinen die Isocyanatkomponente vorgelegt und das Blockierungsmittel portionsweise zugegeben. Die Reaktion kann in Substanz oder auch in Gegenwart geeigneter (inerter) Lösemittel durchgeführt werden. Bevorzugt wird jedoch in Substanz gearbeitet. Dabei wird die Isocyanatkomponente auf 90 - 130 °C erhitzt. Bei dieser Temperatur erfolgt in bekannter Weise die Zugabe des Blockierungsmittels. Nach Beendigung der Zugabe des Blockierungsmittels wird die Reaktionsmischung zur Vervollständigung der Umsetzung nun etwa 1 bis 2 h bei 120 °C erhitzt. Das Blockierungsmittel wird in solchen Mengen zugegeben, dass auf 1 NCO-Äquivalent der Isocyanatkomponente 0,5 bis 1,1 mol Blockierungsmittel, bevorzugt 0,8 bis 1 mol, besonders bevorzugt 1 mol, zur Reaktion kommen. Zur Beschleunigung der Isocyanat-Polyadditionsreaktion können die in der Polyurethan-Chemie üblichen Katalysatoren, wie z. B. organische Zinn-, Zink- oder Aminverbindungen in einer Menge von 0,01 bis 1 Gew.-%, bezogen auf das Gesamtgemisch, zugegeben werden.

Die Lösemittel freie Blockierungsreaktion kann auch kontinuierlich im statischen Mischer oder vorteilhaft im Mehrwellenkneter, insbesondere im Zweischneckenextruder, durchgeführt werden.

Der Gesamt-NCO-Gehalt der blockierten Vernetzerkomponente A) beträgt 8 bis 20 Gew.-%, vorzugsweise 9 bis 17 Gew.-%.
So können die erfindungsgemäßen Pulverlackzusammensetzungen Vernetzer, basierend auf blockierten Polyisocyanaten, blockierten Isocyanuraten und Uretdionen allein oder in Mischungen, enthalten. Bevorzugt werden die Ausgangskomponenten ausgewählt aus IPDI, HDI und HMDI.

Die in den erfindungsgemäßen Pulverlackzusammensetzungen enthaltenen Hilfs- und Zusatzstoffe C ) sind z. B. Verlaufsmittel, Pigmente und Katalysatoren. Diese sind üblicherweise in Mengen von 0,5 - 50 Gew.-% enthalten.

### Allgemeine Herstellvorschrift der Pulverlacke

Zur Herstellung der gebrauchsfertigen Pulverlacke werden das Polyestergemisch, der Vernetzer, Verlaufsmittel, Pigmente, und gegebenenfalls Katalysatoren miteinander bei Raumtemperatur gemischt und anschließend auf einem Extruder oder Kneter bei Temperaturen von 100 - 140 °C homogenisiert. Das Verhältnis von Harz zu Vernetzer wird so gewählt, dass pro reativer Gruppe des Harzes 0,6 bis 1,2, vorzugsweise 0,8 - 1,0, reaktive Vernetzergruppen zur Verfügung stehen.

Nach dem Erkalten wird das Extrudat gebrochen, gemahlen und anschließend auf eine Korngröße < 100 µm abgesiebt. Das so hergestellte Pulver wird mit einer elektrostatischen Pulverspritzanlage bei 60 KV auf entfettete Eisenbleche appliziert und in einem Umlufttrockenschrank zwischen 160 bis 210 °C eingebrannt.

Die Formulierungen enthielten 30 Gew.-% Titandioxid (z.B. Kronos 2160 der Fa. Kronos), 1 Gew.-% Verlaufmittel ( z.B. Resiflow PV 88 der Worlee-Chemie), 0,2 - 0,5 Gew.-% Entgasungsmittel ( z.B. Benzoin der Fa. Merck-Schuchard).

### Einsatzstoffe :

**1) (Semi)kristalliner Polyester B 1 :** Dynacoll 7390, OH-Zahl 32 mg KOH/g, ( Degussa AG)
**2) Herstellung des (semi)kristallinen Polyesters B 2 :** (COOH-funktionalisiert)

Die Herstellung des (semi)kristallinen Polyesters B2 erfolgt durch Umsetzung des kommerziell verfügbaren kristallinen hydroxylfunktionalisierten Polyesters Dynacoll 7390 (Produkt der Degussa AG) mit Bersteinsäureanhydrid. In einem 5 Liter beheizbaren Rührreaktor werden 3500 g Dynacoll 7390 (OH-Zahl 32; Schmelzbereich 105 - 115 °C) gegeben und aufgeschmolzen, zu der Schmelze (ca. 160 °C) werden dann unter Rühren innerhalb von 10 Min. 210g Bernsteinsäureanhydrid hinzugefügt. Das Reaktionsgemisch wird anschließend 2 Stunden auf 180 - 210 °C erhitzt. Danach wird der saure Polyester ausgetragen, abgekühlt und das entstandene Festprodukt (Säurezahl 34 mg KOH/g;) zerkleinert.

### 1) Amorphe Polyester:

Uralac P 875, SZ-Zahl: 35 mg KOH/g, TG: 56 °C (DSM, Niederlande)
Uralac P 6600, SZ-Zahl: 33 mg KOH/g, TG: 57 °C (DSM, Niederlande)
Uralac P 1580, OH-Zahl : 85 mg KOH/g, TG : 51 °C (DSM. Niederlande)

### 2) Vernetzer

ARALDIT PT 810 , Polyepoxid , (Vantico)
VESTAGON HA 320, Hydroxyalkylamid , (Degussa AG)
VESTAGON B 1530, Polyisocyanat Caprolaktm blockiert, (Degussa AG)
VESTAGON BF 1540, Polyisocyanat Uretdion basierend, (Degussa AG)

### 3) Formulierungen :

### Beispiel 1:

Hydroxyalkylamid-System
Einbrennbedingungen : 15 min. 180 °C
Glanz: 33 Skalenteile im 60 ° 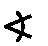
Erichsentiefung 10 mm
Kugelschlag (direct/reverse) 120/80 in·lb

| Produkte | | Massen-% | Einsatzstoffe |
|---|---|---|---|
| | | | |
| Vernetzer | | 3,50 | VESTAGON HA 320 |
| Amorpher Polyester | | 39,10 | URALAC P 875 |
| Semikristalliner Polyester | | 26,10 | B2) |
| Pigment TiO₂ | | 30,00 | KRONOS 2160 |
| Verlaufsmittel | | 1,00 | RESIFLOW PV 88 |
| Entgasungsmittel | | 0,30 | Benzoin |

### Beispiel 2:

TGIC-System
Einbrennbedingungen : 15 min. 180 °C
Glanz: 31 Skalenteile im 60 ° 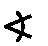
Erichsentiefung 11 mm
Kugelschlag (direct/reverse) 130/80 in·lb

| Produkte | | Massen-% | Einsatzstoffe |
|---|---|---|---|
| | | | |
| Vernetzer | | 5,00 | ARALDIT PT 810 |
| Amorpher Polyester | | 38,10 | URALAC P 6600 |
| Semikristalliner Polyester | | 25,40 | B2) |
| Pigment TiO₂ | | 30,00 | KRONOS 2160 |
| Verlaufsmittel | | 1,00 | RESIFLOW PV 88 |
| Entgasungsmittel | | 0,50 | Benzoin |

### Beispiel 3:

Polyurethan-System ( Caprolaktam blockiert )
Einbrennbedingungen : 12 min. 200 °C
Glanz: 15 Skalenteile im 60 ° 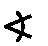
Erichsentiefung 11 mm
Kugelschlag (direct/reverse) 60/20 in·lb

| Produkte | | Massen-% | Einsatzstoffe |
|---|---|---|---|
| | | | |
| Vernetzer | | 15,80 | VESTAGON B 1530 |
| Amorpher Polyester | | 31,60 | URALAC P 1580 |
| Semikristalliner Polyester | | 21,10 | B1) |
| Pigment TiO₂ | | 30,00 | KRONOS 2160 |
| Verlaufsmittel | | 1,00 | RESIFLOW PV 88 |
| Entgasungsmittel | | 0,50 | Benzoin |

### Beispiel 4:

Polyurethan-System (Uretdion basierend)
Einbrennbedingungen: 12 min.200 °C
Glanz: 32 Skalenteile im 60 ° 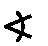
Erichsentiefung 11,5 mm
Kugelschlag (direct/reverse) 100/70 in·lb

| Produkte | | Massen-% | Einsatzstoffe |
|---|---|---|---|
| | | | |
| Vernetzer | | 15,20 | VESTAGON BF 1540 |
| Amorpher Polyester | | 32,00 | URALAC P 1580 |
| Semikristalliner Polyester | | 21,30 | B1) |
| Pigment TiO₂ | | 30,00 | KRONOS 2160 |
| Verlaufsmittel | | 1,00 | RESIFLOW PV 88 |
| Entgasungsmittel | | 0,50 | Benzoin |

## Patentansprüche

1. Pulverlackzusammensetzung für Beschichtungen mit mattem Erscheinungsbild im Wesentlichen enthaltend
A) eine Vernetzerkomponente und
B) eine COOH-Gruppen und/oder OH-Gruppen haltige Polyesterkomponente bestehend aus
B1) 10 bis 80 Gew.-% mindestens eines amorphen Polyesters,
B2) 20 bis 90 Gew.-% mindestens eines (semi)kristallinen Polyesters, erhalten durch Umsetzung von 50 bis 100 Mol-% Bernsteinsäure und/oder Adipinsäure und/oder Sebacinsäure und/oder Dodecandisäure und/oder -anhydrid und/oder - ester und 50 bis 100 Mol-% Monoethylenglykol, Butandiol-1,4 und/oder Hexandiol-1,6,
wobei der Polyester eine OH-Zahl von 0 bis 200 mg KOH/g und eine COOH-Zahl von 0 bis 150 mg KOH/g aufweist und mindestens eine Zahl größer als null ist, und pro funktionelle Gruppe des Polyesters 0,6 bis 1,2 reaktive Gruppen des Vernetzers zur Verfügung stehen.

2. Pulverlackzusammensetzung nach Anspruch 1,
**dadurch gekennzeichnet,**
**dass** sie zusätzlich C)1 - 50 Gew.-% Hilfs- und Zusatzstoffe enthalten.

3. Pulverlackzusammensetzung nach mindestens einem der vorherigen Ansprüche,
**dadurch gekennzeichnet,**
**dass**
B1) 60 - 70 Gew.-% mindestens eines amorphen Polyesters und
B2) 30 - 40 Gew.-% mindestens eines (semi)kristallinen Polyesters
im Polyester B) enthalten sind.

4. Pulverlackzusammensetzung nach mindestens einem der vorherigen Ansprüche,
**dadurch gekennzeichnet,**
**dass** der amorphe Polyester B1) eine COOH- und/oder OH-Zahl von 15 - 200 mg KOH/g, einen Tg von 35 - 85 °C, einen Schmelzbereich von 60 bis 110 °C, eine Hydroxyl- bzw. Säurezahl von < 10 mg KOH/g und die Molmassen betragen bevorzugt 2000 bis 7000 aufweist.

5. Polyester-Pulverlacke nach Anspruch 4,
**dadurch gekennzeichnet,**
**dass** der Polyester B1) als Säurekomponente Isophthalsäure, Phthalsäure, Adipinsäure, Azelainsäure, Sebacinsäure, Dodecandisäure, Trimellitsäure, Hexahydroterephthalsäure, Hexahydrophthalsäure, Bernsteinsäure oder 1,4-Cyclohexandicarbonsäure, allein oder in Mischungen, enthält.

6. Polyester-Pulverlacke nach Anspruch 5,
**dadurch gekennzeichnet,**
**dass** als Polyolkomponente für die amorphen Polyester lineare, aliphatische oder cycloaliphatische Diole enthalten sind.

7. Polyester-Pulverlacke nach Anspruch 6,
**dadurch gekennzeichnet,**
**dass** Monoethylenglykol, Diethylenglykol, Dicidol, Hydroxypivalinsäureneopentylglykolester, Neopentylglykol, Cyclohexandimethanol, Butandiol-1,4, Pentandiol-1,5, Pentandiol-1,2, Hexandiol-1,6 oder Nonandiol-1,9, allein oder in Mischungen, enthalten sind.

8. Polyester-Pulverlacke nach mindestens einem der vorherigen Ansprüche,
**dadurch gekennzeichnet,**
**dass** der (semi)kristalline Polyester B2) eine COOH- und/oder OH-Zahl von 15 - 150 mg KOH/g, Schmelzpunkte zwischen 60 und 130 °C, eine Glasübergangstemperatur <- 10 °C und mittlere Molekulargewichte zwischen 1800 und 6500 aufweist.

9. Polyester-Pulverlacke nach Anspruch 8,
**dadurch gekennzeichnet,**
**dass** der (semi)kristalline Polyester B2) als Säurekomponente Bernsteinsäure, und/oder Adipinsäure und/oder Sebacinsäure und/oder Dodecandisäure in Mengen von mindestens 50 mol-%, bevorzugt 85 mol-%, bezogen auf die Gesamtmenge aller Carbonsäuren, enthält.

10. Polyester-Pulverlacke nach Anspruch 9,
**dadurch gekennzeichnet,**
**dass** maximal 50 mol-%, bevorzugt 15 mol-%, andere aliphatische, cycloaliphatische oder aromatische Dicarbonsäuren enthalten sind.

11. Polyester-Pulverlacke nach Anspruch 10,
**dadurch gekennzeichnet,**
**dass** Glutarsäure, Azelainsäure, 1,4-, 1,3- oder 1,2-Cyclohexandicarbonsäure, Terephthalsäure oder Isophthalsäure, allein oder in Mischungen, enthalten sind.

12. Polyester-Pulverlacke nach einem der Ansprüche 9 bis 11,
**dadurch gekennzeichnet,**
**dass** als Polyolkomponente Monoethylenglykol, Butandiol-1,4 und/oder Hexandiol-1,6 in Mengen von mindestens 80 mol-%, bezogen auf die Gesamtmenge aller Polyole, allein oder in Mischungen, enthalten sind.

13. Polyester-Pulverlacke nach Anspruch 12,
**dadurch gekennzeichnet,**
**dass** maximal 20 mol-% andere aliphatische und/oder cycloaliphatische, lineare und/oder verzweigte Polyole enthalten sind.

14. Polyester-Pulverlacke nach Anspruch 13,
**dadurch gekennzeichnet,**
**dass** Diethylenglykol, Hydroxypivalinsäureneopentylglykol, Neopentylglykol, Cyclohexandimethanol, Pentandiol-1,5, Pentandiol-1,2, Nonandiol-1,9, Trimethylolpropan, Glyzerin oder Pentaerythrit, allein oder in Mischungen, enthalten sind.

15. Polyester-Pulverlacke nach mindestens einem der Ansprüche 1 bis 14,
**dadurch gekennzeichnet,**
**dass** als Vernetzer A) für COOH-Polyester TGIC und/oder TGIC-Derivate und/oder β-Hydroxyalkylamide enthalten sind.

16. Polyester-Pulverlacke nach Anspruch 15,
**dadurch gekennzeichnet,**
**dass** β-Hydroxyalkylamide der Formel enthalten sind: 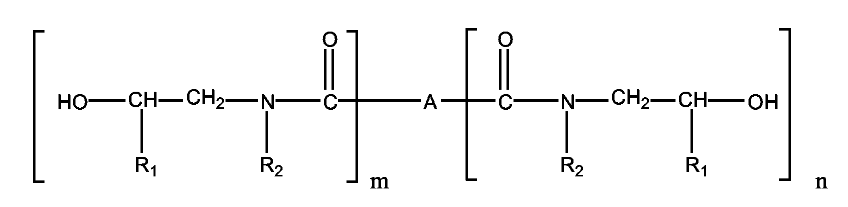 in der R₁ Wasserstoff, ein aromatischer Rest oder eine C₁-C₅-Alkylgruppe, R₂ Wasserstoff ein aromatischer Rest eine C₁-C₅-Alkylgruppe oder 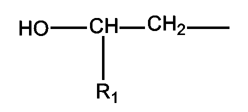 und A eine chemische Bindung oder eine einwertige oder mehrwertige organische Gruppe, ausgewählt aus gesättigten, ungesättigten oder aromatischen Kohlenwasserstoffgruppen, oder substituierten Kohlenwasserstoffgruppen, mit 2 bis 20 Kohlenstoffatomen, bedeuten, m ist 1 bis 2, n ist 0 bis 2 und m + n ist mindestens 1.

17. Polyester-Pulverlacke nach Anspruch 16,
**dadurch gekennzeichnet,**
**dass** 2 - 10 Gew.-%, bevorzugt 3 - 5 Gew.-%, β-Hydroxyalkylamid enthalten sind.

18. Polyester-Pulverlacke nach einem der Ansprüche 1 bis 14,
**dadurch gekennzeichnet,**
**dass** als Vernetzer A) für OH-Polyester Polyisocyanate mit einer Funktionalität von ≥ 1,7 enthalten sind.

19. Polyester-Pulverlacke nach Anspruch 18,
**dadurch gekennzeichnet,**
**dass** blockierte und/oder intern blockierte Polyisocyanate enthalten sind.

20. Polyester-Pulverlacke nach Anspruch 18 oder 19,
**dadurch gekennzeichnet,**
**dass** Polyisocyanate auf Basis von IPDI, HDI und/oder HMDI enthalten sind.

21. Polyester-Pulverlacke nach einem der Ansprüche 18 bis 20,
**dadurch gekennzeichnet,**
**dass** Urethangruppen und/oder Isocyanuratgruppen und/oder Uretdiongruppen haltige Polyisocyanate enthalten sind.

22. Verwendung einer Pulverlackzusammensetzung für Beschichtungen mit mattem Erscheinungsbild im Wesentlichen enthaltend
A) eine Vernetzerkomponente und
B) eine COOH-Gruppen und/oder OH-Gruppen haltige Polyesterkomponente bestehend aus
B1) 10 bis 80 Gew.-% mindestens eines amorphen Polyesters
B2) 20 bis 90 Gew.-% mindestens eines (semi)kristallinen Polyesters, erhalten durch Umsetzung von 50 bis 100 Mol-% Bernsteinsäure und/oder Adipinsäure und/oder Sebacinsäure und/oder Dodecandisäure und/oder -anhydrid und/oder - ester und 50 bis 100 Mol-% Monoethylenglykol, Butandiol-1,4 und/oder Hexandiol-1,6,
wobei der Polyester eine OH-Zahl von 0 bis 200 mg KOH/g und eine Säurezahl von 0 bis 150 mg KOH/g aufweist und mindestens eine Zahl größer als null ist, und pro funktionelle Gruppe des Polyesters 0,6 bis 1,2 reaktive Gruppen des Vernetzers zur Verfügung stehen.

23. Verwendung einer Pulverlackzusammensetzung nach Anspruch 22,
**dadurch gekennzeichnet,**
**dass** Ausgangsstoffe nach mindestens einem der Ansprüche 1 bis 21 enthalten sind.
